# EUROPEAN PATENT APPLICATION

(11) **EP 4 324 327 A1**
(43) Date of publication of application: **21.02.2024**
(21) Application number: 23180161.4
(22) Date of filing: 19.06.2023
(51) Int. Cl.: A01K 97/04, A47J 42/26

(54) **BAIT GRINDING**

(30) Priority: 17.08.2022 GB 202212014; 15.11.2022 EP 22207555
(71) Applicant: Ultimate Future Ltd, London EC1V 2NX (GB)
(72) Inventor: TILLER, Carl, Staines, TW18 4US (GB)
(74) Representative: King, Alex

(57) **Abstract**

The present invention relates to a method and grinder for grinding bait for fishing. In particular, the present invention provides a portable, electric motor driven, battery operated grinder and a method of grinding fish bait using said grinder.

## Description

The present invention relates to a method and a grinder for grinding bait for fishing.

Ground-bait is a term used to refer to bait which is cast into the water by an angler using various methods such as swim feeders, cage feeders or PVA bags, in order to attract fish to a fishing area. There are many different types of ground-bait including commercial products and products "home-produced" by individual anglers. The bait is often initially produced in the form of pellets or balls. Typical bait "forms" used by carp anglers or specimen anglers, for example, are "boilies", pellets and particles.

"Boilies", for example, are boiled paste fishing balls, usually combinations of fishmeals, milk proteins, bird foods and other ingredients, which are mixed with a binding agent and then boiled and formed into hard balls.

Another type of fish bait which is commonly used is Tigernuts. These are not actually nuts at all, but a small root vegetables with a rough texture.

Depending on the bait mixture, the balls can break up themselves in the water. However, it is common to want to grind larger bait particles, such as pellets, balls and nuts prior to use. An angler may, for example, grind these baits down to use in a bait mix or PVA bag which is a method known for delivering bait with a fishing rig inside the bag or outside dependent of the preferred fishing situation.

Manual devices for grinding or crushing bait are well-known. These include containers with turnable blades and an external manual handle for turning the blades, such as the RidgeMonkey^{®} Advanced Boilie Crusher and the NGT Multi Bait Grinder System, or smaller handheld devices such as the Korda Krusha and the NGT bait crusher where the bait is crushed by twisting. However, such devices tend to be disadvantageous because they tend to be bulky in size and also arduous on the operator and can be difficult to use.

Kitchen blenders for blending foodstuffs are also well-known. Typical products available include smoothie makers, coffee bean grinders, ice grinders and veg grinders. Most devices are mains powered. Some devices are known which are portable and battery powered, such as the BlendJet and BlendJet 2 portable blenders (https://blendiet.com), and mini garlic blenders. It has been found, however, that such devices are not suitable for grinding of the hard fish baits of the types noted above.

Thus, the present invention relates to an improved method for the grinding of fish baits and an improved grinder for the grinding of fish baits, in particular such as boilies, pellets and Tigernuts.

Thus, in a first aspect the present invention provides a grinder for grinding fish bait, wherein the grinder is a portable, electric motor driven, battery operated grinder comprising: .
i) a container, the container having a base and a top,
ii) one or more batteries and
iii) a motor,
wherein
(a) said one or more batteries provide a voltage of at least 6V,
(b) said motor being rated for the provided voltage and for a power of at least 40W and having a no-load speed of at least 15000 rpm,
further wherein there is provided, located in the container, a spindle comprising one or more blades and at least one displacing arm, which spindle connects to and is turned by the motor to grind the fish bait,
wherein
A) the displacing arm is located on the spindle at a location closer to the base of the container than the one or more blades, and
B) the displacing arm extends parallel to the base of the container, with a clearance between the base of the container and the displacing arm which is less than 5mm.

In a preferred embodiment of the first aspect, the present invention provides a grinder for grinding fish bait, wherein the grinder is a portable, electric motor driven, battery operated grinder comprising: .
i) a container, the container having a base and a top,
ii) one or more batteries and
iii) a motor,
wherein
(a) said one or more batteries provide a voltage of at least 6V,
(b) said motor being rated for the provided voltage and for a power of at least 40W and having a no-load speed of at least 15000 rpm,
further wherein there is provided, located in the container, a spindle comprising one or more blades and at least one displacing arm, which spindle connects to and is turned by the motor to grind the fish bait,
wherein
A) the displacing arm is located on the spindle at a location closer to the base of the container than the one or more blades,
B) the displacing arm has a leading edge with a thickness of at least 0.5mm, and
C) the displacing arm extends parallel to the base of the container over at least 50% of the radius of the container, with a clearance between the base of the container and the displacing arm which is less than 5mm, and
D) the one or more blades have a thickness at their leading edge which is at least 0.3mm.

In a second aspect the present invention also provides a method for grinding fish bait, said method comprising grinding the fish bait in a grinder according to the first aspect.

Preferably the fish bait is selected from Tigernuts, pellets, seeds or boilies, and most particularly is boilies.

We will describe hereinafter the details of the grinder, and exemplify a preferred grinder. For avoidance of doubt, unless clearly identified otherwise these details apply to both for the grinder of the first aspect and the grinder as used in the method of the second aspect. Similarly, reference to "the present invention", unless identified otherwise, refers generally to both the first and second aspects of the present invention.

It is an important feature of the present invention that the grinder is a portable, electric motor driven, battery operated grinder. In particular, the grinder operates from batteries, and not a mains power supply. This ensures that it is portable, and can be used "on-site" at the fishing location. Preferably it can be charged via a power bank. In embodiments the grinder may also be powered directly off a power bank.

The grinder preferably comprises an internal battery or batteries, and preferably a rechargeable battery or batteries. For simplicity we may refer hereinafter to a "battery" but the term can be understood to refer to not only a single battery, but also two or more batteries or a battery pack. Any battery or combination of batteries which can provide the required voltage can be used. Preferred batteries are lithium based batteries.
It is a requirement of the present invention that the battery or batteries can provide a voltage of at least 6V. In contrast, typical portable food and garlic blenders typically operate off of a voltage of only 5V, this also being the usual output of USB chargers. Preferably the output voltage of the battery or batteries in the present invention is 7V or above, such as 7.4V or above. The higher voltage enables the required power to be achieved at a lower current than with lower voltage operation.

Whilst higher voltages still are generally desirable for this purpose, this is at the expense of higher battery weight. Preferred voltage is therefore in the range 6 to 10V, such as 7 to 10V.

Correspondingly, the motor is rated for the provided voltage i.e. for a voltage of at least 6V, preferably a voltage of at least 7V, such as at least 7.4V. The motor is also rated for a power of at least 40W and has a no-load speed of at least 15000 rpm.

Preferably the no-load speed is at least 20000 rpm (revolutions per minute), and more preferably at least 25000 rpm, such as 25000 to 35000 rpm.

The no-load power of the motor is typically at least 12W, such as at least 15W. The no-load power may be in the range 12 to 24W, for example. The no-load current of the motor is typically at least 2A, such as at least 2.2A, and preferably at least 2.4A. The no-load current is preferably in the range 2.2A to 2.8A, such as 2.4A to 2.8A.

In operation the current (and power) will typically be higher than the no-load current (and power), and hence the motor is rated for a higher power than the no-load power. In the present invention the motor is typically rated for a maximum power in the range 40 to 150W, such as in the range 60 to 120W.

The motor is typically rated for a maximum current of at least 5A, such as at least 8A. The maximum current may, for example, be in the range 8A to 15A.

As a specific example, the motor may be a motor with a rated voltage of 3 to 7.4V and a rated power of 6.5 to 110W. When connected to a 7.4V battery pack, the motor will have a no-load current of 2.4A, and a corresponding no load power of 18W, with a no-load speed of 27000rpm. During grinding the power may be up to 110W and the current up to 15A.

To provide sufficient amounts of grinding i.e. of a number of different batches, the battery or batteries preferably have a capacity of at least 2000 mAh, more preferably at least 3000 mAh, and most preferably at least 4000 mAh.

As an example, 4000mAh at 7.4V should be generally sufficient capacity to operate the grinder for 20-30 minutes without recharging. This should be sufficient for grinding at least 20 batches of bait, such as 20-40 batches, although this depends, of course, on how long the operator grinds each batch for.

Although not preferred, in some embodiments of the present invention the motor is a geared motor with at least two gears. When a geared motor is used, the motor preferably comprises 2 or 3 gears.

Most preferably the motor is not geared. In particular, the motor is preferably a direct drive motor.

The grinder may comprise a power cable to enable a power source to be connected. For example, a permanently attached cable with a USB adaptor can be provided which can then be connected to a suitable USB charging device, such as a power bank. Alternatively the grinder may comprise a port which enables a (detachable) power cable to be connected, and this cable then enabling a power source to be connected. In a most preferred embodiment the grinder will comprise a USB charging cable or a charging port to enable charging via a USB cable so that an internal battery or batteries may be charged or recharged from a portable power bank or similar power source.

Where a cable is present, either permanently attached or detachable, the grinder may comprise a cable storage cavity in which the cable may be stored when not in use.

In one embodiment batteries may be provided in series to enable higher voltages to be produced. For example, two sets of 3.7V batteries (each set having one battery or two or more batteries in parallel) can be provided in series to enable a total voltage of 7.4V to be obtained.

In some embodiments the battery or batteries may be removable. For example, the battery or batteries, preferably in the form of a battery pack, may fit in a suitable cavity or receiver on the grinder. This has the advantage that exhausted batteries can be removed and replaced with charged batteries so the grinder can be continued to be used even in the absence of a separate power source or without having to wait for the batteries to be recharged. In this embodiment the grinder may have two or more sets of batteries (which can each provide the required voltage of at least 6V). One may be "used" in the grinder, whilst the other is a "spare" set. The "spare" set may be being charged whilst the other set is being used.

Typically, and preferably, the grinder comprises a base unit which contains the battery or batteries and the motor. Typically, any power cable or port which may be present will also be part of the base unit, along with any electronics such as switches and circuit boards, some example of which are described further below.

The grinder further comprises a container. The container has a base and a top, and is for containing the bait whilst it is ground.

The grinder comprises, located in the container, a spindle comprising one or more blades and at least one displacing arm. The spindle connects to and is turned by the motor to grind the fish bait. The spindle may be connected to the motor by any suitable means, such as a motor shaft. The spindle generally sits on the central axis of the container, which is typically cylindrical in cross-section (although the cross-section may increase with height).

In the present invention there is provided at least one displacing arm located on the spindle at a location closer to the base of the container than the one or more blades. The displacing arm extends parallel to the base of the container, with a clearance between the base of the container and the displacing arm which is less than 5mm. In the preferred embodiment:
A) the displacing arm is located on the spindle at a location closer to the base of the container than the one or more blades,
B) the displacing arm has a leading edge with a thickness of at least 0.5mm, and
C) the displacing arm extends parallel to the base of the container over at least 50% of the radius of the container, with a clearance between the base of the container and the displacing arm which is less than 5mm, and
D) the one or more blades have a thickness at their leading edge which is at least 0.3mm.

It has been found that a grinder with the displacing arm (or displacing arms) and blades as claimed can effectively grind a range of fishing baits, including specifically very hard baits such as boilies, without stalling or choking.

The at least one displacing arm preferably has a leading edge with a thickness of at least 0.5mm. The displacing arm leading edge may be considered as a blunt leading edge. Without wishing to be bound by theory, it is believed that by having at least one displacing arm rather than a sharp blade or blades at the base of the container then particles of bait are lifted away from the base without catching on the arm. They are then ground by the blades above. In particular, the blades above also do not have a sharp leading edge, but rather have a thickness at their leading edge which is at least 0.3mm. These blades rotate at high speed and grind the bait into a powder. (The one or more blades may also be considered to have a blunt leading edge therefore, albeit the leading edge can still grind the bait.) In contrast, designs with sharp edges (on either any equivalent of the displacing arm or the claimed blades) may embed themselves in the boilies or other bait pellets, causing them to catch/stick in the bait pellets. The fish bait pellets then either simply move around without being ground, or catch between the arm/blades and the base or sides of the container, causing the arm/blades to become stuck and causing stalling of the grinder.

(In general terms, "grinding" is considered to involve mainly the physical attrition of a particle or pellet from the outside, whilst "cutting" involves cutting a particle or pellet into two pieces (at least at each cut), which cut can take place through any part of the particle or pellet. It should also be noted that the objective of grinding fish bait is to break up the bait balls or pellets to provide a powder. However, it is not desired to "puree" or "liquify" them, which is the case in blenders designed to make smoothies and the like. The displacing arm(s) and blades are adapted to grind rather than blend the bait. The term "blades" is nevertheless used in the present invention even though the blades do not have a sharp leading edge since they still grind the bait to produce smaller particles.)

It should be noted that, as used herein, the term "leading edge" is defined in the direction of rotation i.e. refers to the edge which is at the front in the direction of rotation of the displacing arm(s) and blades. If the spindle, and hence the displacing arm(s) and blades can rotate in both clockwise and anticlockwise directions then the leading edges change with the direction of rotation. It should be clear that the requirements of the present invention for the leading edges are applied on sides which are leading edges of both the displacing arm or arms and the one or more blades when rotated in the same direction. When the spindle can rotate in both directions then the requirements of the present invention are preferably applied on both sides of the displacing arm or arms and the one or more blades.

We will describe hereafter the preferred features of the at least one displacing arm. Typically there may be 1 to 4 displacing arms, with 1 to 3, such as 1 or 2 displacing arms being preferred. For avoidance of doubt, even if we refer to the displacing arm in the singular herein, it should be noted that where more than one displacing arm is provided then each displacing arm nevertheless also preferably has the preferred or other features as described i.e. where reference is made to "a displacing arm" or "the displacing arm" as having a particular preferred or other feature, this should be understood to preferably be the case for all displacing arms where more than one is present. (At least to the extent we are describing the at least one displacing arm located on the spindle at a location closer to the base of the container than the one or more blades. We do not preclude other features which may be considered as displacing arms being present at other locations, although this is not preferred.)

As noted, the displacing arm preferably has a leading edge with a thickness of at least 0.5 mm. Thus, it does not have a sharp edge, at least on its leading edge. Further the displacing arm extends parallel to the base of the container, preferably over at least 50% of the radius of the container, with a clearance between the base of the container and the displacing arm which is less than 5mm. The low clearance prevents bait pellets collecting on the base of the container under the displacing arm. The blunt leading edge enables the arm to push bait particles up and away from the base.

The displacing arm may have, for example, a curved or flat leading edge. The leading edge may have a thickness of at least 1mm. In embodiments the leading edge may have a thickness of at least 2mm, such as 2 to 5mm. In other embodiments, the leading edge may have a thickness of 0.5 to 2mm, such as 1 to 2mm

The displacing arm may itself have a maximum thickness in the range 0.5 to 5mm, such as 0.5 to 2mm or 2 to 5mm.

The displacing arm may, for example, be in the form of a rod, for example of a cylindrical shape with a diameter of 0.5 to 5mm, such as 0.5 to 2mm or 2 to 5mm.

Alternatively, the displacing arm may have a planar surface, particularly a planar lower surface, and, preferably, a thickness (normal to the plane) of 0.5 to 5 mm, such as 0.5 to 2mm or 2 to 5mm. In one example, the displacing arm may have planar upper and lower surfaces which are parallel to each other and also to the base of the container, and preferably with a thickness of 0.5 to 5mm, such as 0.5 to 2mm or 2 to 5mm as noted. However, other configurations are possible - for example, the upper surface may not be parallel to the base but orientated so that its distance from the base increases away from the leading edge. This can, for example, provide an "upwards" slope ("behind" the leading edge of the displacing arm) that can assist in displacing pellets up into the higher parts of the container.

Where the leading edge is curved it may, for example, be convex.

Where the leading edge is flat, the leading edge may sit in a plane which is parallel to the axis of the contained or in a plane which is angled slightly off of parallel to the axis, as long as a sharp edge is not formed at the front of the leading edge. Preferably, the flat leading edge may sit in a plane which is parallel to the axis or in a plane which is angled within 30°, for example within 15°, of parallel to the axis (Typically, the grinder is used with the axis in a vertical direction. Another way of defining the above, therefore, is that if the grinder is held so that the axis of the container is vertical then the flat leading edge is also vertical or within 30°, such as within 15°, of vertical.) A slight "upwards" slope at the leading edge can, for example, also assist in displacing pellets up into the higher parts of the container.

Preferably, the base of the container is essentially flat across most of its radius from the central spindle to the sides of the container. In this way a largely straight displacing arm can be provided and a constant (low) clearance easily obtained across all or most of the radius of the container.

The displacing arm extends parallel to the base of the container, preferably over at least 50% of the radius of the container, with a clearance between the base of the container and the displacing arm which is less than 5mm. (For avoidance of doubt the clearance should be less than 5mm also over at least 50% of the radius of the container, and more particularly over length of the displacing arm.)

Preferably, the displacing arm extends parallel to the base across at least 60%, and more preferably over at least 80% of the radius of the container. It may, however, and for example, comprise an upturned end near the outside of the container to also displace bait pellets away from the edges (at the base) of the container.

The displacing arm should preferably extend from the spindle (at the centre of the container) to close to the edge of the container, such as within 10mm, preferably within 5mm of the edge.

The clearance between the base of the container and the displacing arm is preferably less than 4mm, such as less than 3mm, or even less than 2mm.

As noted, there may be provided one displacing arm, or two or more may be provided which extend from the spindle in different directions. For example, two displacing arms may be provided on opposite sides of the spindle, whilst 3 or more would generally be spaced approximately evenly around the spindle. (For example, 3 arms would typically be at 120° from each other.

In relation to the one or more blades, preferably these have a thickness at their leading edge which is at least 0.3mm. The leading edge may, similarly to the leading edge of the displacing arm or arms, be flat or curved, and similar other options apply albeit the thickness may be less than 0.5mm. A preferred thickness at the leading edge is however, also at least 0.5 mm, for example, 0.5 to 3mm, and most preferably 1 to 2mm. As noted, the blades do not have a sharp leading edge, but can rotate at high speed and grind the bait into a powder.

As noted already, bait particles, particularly types such as Tigernuts and boilies, are very hard. Thus, the blades are preferably metal, such as stainless steel, or another suitably strong material.

There may be any suitable number of blades, such as 1 to 16 blades, or 2 to 8 blades. (For avoidance of doubt each/all having the leading edge as noted.) The blades are located above the displacing arm (i.e. at a location further from the base of the container than the displacing arm). In some embodiments, the blades may be orientated to extend across the container (relative to the axis/spindle). In such embodiments they may, extend, relative to the diameter of the container, across all or only part of the diameter. In such embodiments they may, for example, extend essentially parallel to the one or more displacing arms, although they may be off-set.

In preferred embodiments, however, at least some of the blades, preferably all, are substantially parallel to the axis of the container (and hence substantially parallel to the sides of the contained and substantially perpendicular to the at least one displacing arm), and in particular located in the central portion of the container (the central portion being defined herein as the area defined by a circle about the axis of the container but with 50% of the internal radius of the container). In particular, due to the presence of the displacing arm bait is agitated within the container and it is not necessary for the blades to extend across the container for effective grinding to be achieved. This parallel configuration of the blades/spacing from the side of the container has been found to minimise the risk of larger pellets becoming stuck between the blades and the sides of the container. (Substantially parallel to the axis of the container in this embodiment means within 30°, preferably within 15° of the axis.)

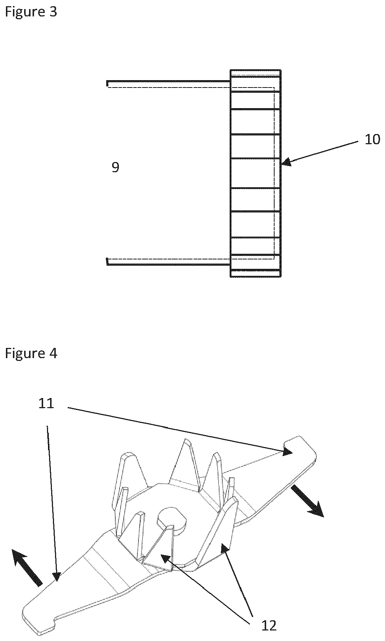

In particularly preferred embodiments at least 4, such as at least 6, for example 6 to 16, blades are provided which are orientated substantially parallel to the axis of container, and preferably located in the central portion of the container (defined as above). The leading edges of the blades are the leading edge in the direction of rotation and have a thickness which is at least 0.3mm. (Or both "leading" and "trailing" edges may have a thickness which is at least 0.3mm if the direction of rotation can be reversed). The blades are spaced around the circumference of the circle formed by one of the blades when it rotates, and preferably largely "evenly" spaced. (For example with 4 blades the blades will be spaced at approximately 90° to the adjacent blades, with 6 blades at approximately 60° to adjacent blades, or more generally n blades will be spaced with approximately 360/n degrees to adjacent blades. (And "approximately" in this context meaning adjacent blades being spaced within 15% of the value given by 360/n.)) The preferred number of blades and spacing is such as to prevent gaps of more than 10mm between the leading edge of one blade and the trailing edge of the next. In particular, having multiple blades with small gaps between them makes it harder for pellets to get trapped between adjacent blades. A specific example is shown in Figure 4 and described further below.

The grinder may be configured in any suitable manner which enables bait to be placed into the container and then ground. As noted, the grinder may comprise a base unit which contains the battery or batteries and the motor, as well as the container which contains the spindle, displacing arm or arms, and blades.

In preferred embodiments the container and base unit may form a single unit. By "single unit" in the present invention is meant that the container and base unit normally stay connected during use, and in particular during grinding and removing of ground bait. They may, for example, be in the form of a single moulded unit or are otherwise connected in a manner that they are not routinely separable. The top of the container is then open to allow fish bait to be placed in the container, and then a lid is placed over the top. An example of this is described further below with reference to the Figures.

In a particularly preferred embodiment the lid/top part may be in the form of a cup or bowl (or other form of what may be considered as a second container) which can act to hold the ground bait. Thus, once the bait has been ground the grinder may be inverted and the top part, containing the ground bait, can then be removed.

In an alternative embodiment the container (containing the spindle, displacing arm(s) and blades can be separated from the base unit once grinding has taken place. The spindle is connected to the motor when the container is placed on the base unit. The spindle, displacing arms(s) and blades may be integrated into the base of the container. Alternatively the spindle, displacing arm(s) and one or more blades may be provided as a further separate unit ("blade unit") which can be connected to e.g. screwed on to, the base of the container, and the combined container and blade unit can then be connected to the base unit. One advantage of this embodiment is that the container containing the ground bait can be disconnected from the base unit whilst maintaining a closed container.

A further advantage of this embodiment is that different blade and displacing arm configurations, either as a part of a second container or a second blade unit can be provided and used with a single base unit. Different blades configurations may be desirable for grinding different types of bait or for different "levels" of grinding, such as grinding to a different average particle size of the ground bait. Or, for example, the clearance of the displacing arm or arms may be selected depending in particular on the unground particle size of the pellets to be ground.

A yet further advantage is that a blade unit can be replaced easily, for example, if worn or broken.

The base unit and container (or container/blade unit combination) in this embodiment are adapted to be connected together such that the motor can turn the spindle and hence grind the bait. The base unit and container can be provided with interlocking slots or recesses which hold the container firmly on the base unit. For example, the base unit top surface may comprise a recess located in the base top having an "L" shaped locking slot located an interior side wall of the recess for receiving a corresponding protrusion on the container, or a half turn thread lock, or similar. Safety mechanisms, such as locks and cut-out switches, can be provided to prevent the blades being turned unless the base unit and container are correctly connected.

The grinder, and preferably in particular the base unit in the preferred embodiments, will also typically comprise a power button or switch to enable the grinder to be turned on and off. In some embodiments there may be other buttons or switches, for example to control the power depending on the bait to be ground. Indicators may be provided, for example to illustrate the charge remaining in the battery. A circuit board, typically a PCBA, will be provided in the base unit and connected to any switches, buttons or indicators, to the battery and to the motor.

The PCBA will generally be selected to enable it to run the motor with required voltage and power.

The container of the grinder of the present invention may be constructed of any suitable material. The material may be transparent or translucent (e.g. frosted), but this is not essential. It is preferably made of plastic rather than glass to avoid the risk of broken glass. Preferred materials include glass reinforced nylon and ABS (Acrylonitrile Butadiene Styrene).

As already noted, the container may comprise a lid located at the end remote to its base, which as used herein will be referred to as the top end of the container. As also already noted, in a particularly preferred embodiment the lid/top part may be in the form of a cup or bowl (or other form of what may be considered as a second container) which can act to hold the ground bait.

The lid may include a mechanism which prevents the motor operating without the lid in place. This provides for improved safety. In particular, it is not then possible for the motor to turn the blades unless they are completely enclosed within the container.

With respect to the container, preferably the container has a diameter of 50 to 300 mm, such as 50 to 150 mm, and more preferably 60 to 100mm. The height is generally in the range 50 to 400 mm, such as 50 to 200 mm. and preferably 50 to 90mm. In a particularly preferred embodiment the height is less than or equal to the diameter. (As used herein, these heights apply also to the combined container and blade unit where these are separable.)

The volume of the container may be at least 500 ml, such as 500 to 2000ml. The volume of the container is more preferably at least 200ml, such as 200 to 500ml. Typically, the container is not filled completely with bait to be ground. In preferred embodiments a "maximum fill" mark or indicator may be provided on the container, for example, at a point between 50 and 75% of the height of the container from the base.

The inside side wall of the container may comprise protrusions. These may be, for example, in the form of nodules or baffles. However, in preferred embodiments the side wall inside of the container is smooth (i.e. does not contain any protrusions) in at least the lower half of the container (defined relative to the base) and preferably is smooth (i.e. does not contain any protrusions) at all. In particular, whilst small protrusions can be present without issue, generally they have no benefit for the grinding, and if too large protrusions can provide points on which unground pellets and boilies can catch, and can increase the risk of stalling of the grinder.

It is preferred that where there is a base unit this is of a similar diameter to the container, and typically the base unit also will have a height of 50 to 400 mm, such as 50 to 200 mm or 50 to 90mm, although this does not have to be the same as that of the container. As well as providing an improved control of the grinding in relation to the container, making the whole grinder compact helps to minimise space requirements, especially if carried in a fishing box or bag.

In embodiments, there may be provided a cover which covers the grinder. The cover may in general terms be used to protect the grinder from scratches. The cover may also provide some protection from impact, for example if the unit is dropped or just from general impacts whilst being carried in a fishing box or bag. Obviously in this case the level of protection will depend on the material, including the thickness, of the cover. A cover may also help to prevent the unit being accidentally switched on.

In embodiments the cover may be waterproof. A waterproof cover will protect the grinder from rain or from water from the watercourse being fished.

The cover may be removed before use of the grinder. In some embodiments, however, the grinder may be used with a cover on. A cover may, for example, be provided which provides sound-proofing to reduce noise when the grinder s being used.

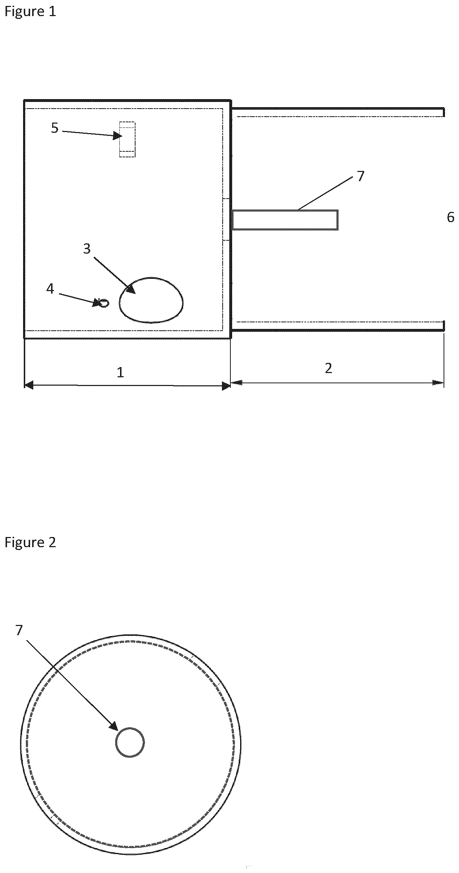

The present invention will be illustrated by reference to Figures 1 to 4 and the following Examples.

In particular, Figure 1 shows in schematic form a side view of the main body of a grinder according to the present invention. The grinder comprises a base unit (1) inside of which are provided rechargeable batteries and a motor (not shown). The grinder further comprises a container (2), which in this embodiment is moulded to the base unit. Also shown on the base unit in Figure 1 are a power button (3), an LED indicator (4) and a USB charging port (5). As shown in Figure 1, the end (6) of the container (2) is open to allow addition and removal of fish bait. At the central axis of the container is a spindle (7)

Figure 2 shows in schematic form an end view of the main body of the grinder of Figure 1, and in particular looking into the open end (6) of the container (2). In the centre of the container is a spindle (7). This is connected to the motor in the base unit (1).

Figure 3 shows a lid which connects on the container of the main body of Figures 1 and 2. The lid is in the form of a cup with an open end (9) which has an internal diameter slightly larger than the external diameter of the container (2). The cup sits around the container (2) during grinding, but can contain the ground bait when removed after grinding. The lid may comprise ridges on its circumference at the end (10) to facilitate its handling, including its connection to and removal from the container (2). The end (10) may be frosted so the operator can see inside the main body even when the lid is in place. This allows the operator to check the desired consistency has been achieved without opening the grinder.

Figure 4 shows a view of a preferred blade and displacing arm configuration for a grinder according to the present invention. In particular, the configuration comprises two displacing arms (11), and a series of 8 blades (12, not all labelled), and which in this example are orientated such that they are parallel to the axis of the container in use. The displacing arms are planar, and provided with a blunt leading edge of thickness 1mm. The blades have a flat leading edge also of thickness 1mm. The blades in Figure 4 are further provided in the central part of the configuration, such that in the grinder they are in the central portion of the container. More particularly, the blades are spaced around the circumference of a circle defined by the path the blades take when rotated, and are evenly spaced around this to avoid any gaps larger than 10mm between the leading edge of one blade and the trailing edge of the preceding blade. (Without wishing to be limited, in this particular configuration the distance from the centre/axis of rotation to one of the leading edges of the blades may be approximately 10mm, whilst the distance to the end of a displacing arm may be approximately 32mm. The maximum spacing may then be approximately 5mm. A suitable container would have a radius of about 35mm/diameter of about 70mm.) This configuration is connected on the spindle of the grinder of Figures 1 and 2, and secured to provide a grinder according to the present invention. The displacing arms (11) extend parallel to the base of the container and the clearance between the base of the container and the bottom of the displacing arm is, in this case, about 3mm. The blades sit just above the displacing arm (relative to the base of the container) and in use grind the bait in the container. (The large arrows show the direction of rotation in use.)

### Examples

The present invention is illustrated for the grinding of boilies.

### Comparative Example

Several different commercially available brands of boilies were tested, including Mainline High Impact Boilies, and boilies from Dynamite Baits, Crafty Carper and Wraysbury Baits. In each case a sample of the boilies were loaded into a BlendJet device which was fully charged. On turning on of the device, however, the grinder was unable to blend the boilies - the blades got stuck and did not turn.

### Example 1

The grinder was a grinder according to Figures 1 to 3 and provided with a blade unit comprising two displacing arms and 8 blades as shown in Figure 4.

The main body of the grinder was as shown in Figure 1 and comprised a base unit and container moulded in a single body. The main body i.e. without the lid in place was 132 mm in length, whilst the grinder as a whole was 137 mm in length with the lid in place. The main body had a 75 mm outer diameter in the base unit section, and an outer diameter of 69.5 mm at the container section. The lid had a 75 mm outer diameter and an internal diameter of 70 mm, with a total length of 70mm. The grinder comprised 6 3.7V rechargeable lithium ion batteries, provided as two series sets of three parallel batteries, giving a total voltage of 7.4V. The motor was a DC motor, rated for 3-7.4V and 6.5 to 110W.

The no-load current was 2.4 A, and the no-load speed 27000 rpm.

Boilies of the same types as used in the Comparative Example were used. In each test, the boilies were loaded into the container and the lid fixed in place over the container. When turned on the motor was able to turn the blades and grind the boilies.

## Claims

1. A grinder for grinding fish bait, wherein the grinder is a portable, electric motor driven, battery operated grinder comprising: .
i) a container, the container having a base and a top,
ii) one or more batteries and
iii) a motor,
wherein
(a) said one or more batteries provide a voltage of at least 6V,
(b) said motor being rated for the provided voltage and for a power of at least 40W and having a no-load speed of at least 15000 rpm,
further wherein there is provided, located in the container, a spindle comprising one or more blades and at least one displacing arm, which spindle connects to and is turned by the motor to grind the fish bait,
wherein
A) the displacing arm is located on the spindle at a location closer to the base of the container than the one or more blades, and
B) the displacing arm extends parallel to the base of the container, with a clearance between the base of the container and the displacing arm which is less than 5mm.

2. A grinder for grinding fish bait, wherein the grinder is a portable, electric motor driven, battery operated grinder comprising: .
i) a container, the container having a base and a top,
ii) one or more batteries and
iii) a motor,
wherein
(a) said one or more batteries provide a voltage of at least 6V,
(b) said motor being rated for the provided voltage and for a power of at least 40W and having a no-load speed of at least 15000 rpm,
further wherein there is provided, located in the container, a spindle comprising one or more blades and at least one displacing arm, which spindle connects to and is turned by the motor to grind the fish bait,
wherein
A) the displacing arm is located on the spindle at a location closer to the base of the container than the one or more blades,
B) the displacing arm has a leading edge with a thickness of at least 0.5mm,
C) the displacing arm extends parallel to the base of the container over at least 50% of the radius of the container, with a clearance between the base of the container and the displacing arm which is less than 5mm, and
D) the one or more blades have a thickness at their leading edge which is at least 0.3mm.

3. A grinder as claimed in claim 1 or claim 2 wherein the grinder comprises a USB charging cable or a charging port to enable charging via a USB cable.

4. A grinder as claimed in any one of the preceding claims wherein the output voltage of the battery or batteries is 7V or above, such as 7.4V or above.

5. A grinder as claimed in any one of the preceding claims wherein the no-load speed is at least 20000 rpm, and preferably at least 25000 rpm.

6. A grinder according to any one of the preceding claims wherein the container has an internal volume of at least 200 ml, such as 200 to 2000 ml.

7. A grinder according to any one of the preceding claims wherein the container is made of a rigid plastic, has a diameter of 50 to 300 mm and a height in the range 50 to 400 mm.

8. A grinder according to any one of the preceding claims wherein the side wall inside of the container is smooth (does not contain any protrusions) in at least the lower half of the container.

9. A grinder according to any one of the preceding claims wherein the displacing arm has a curved or flat leading edge.

10. A grinder according to any one of the preceding claims wherein the leading edge has thickness of 2 to 5mm.

11. A grinder according to any one of the preceding claims wherein the displacing arm is in the form of a rod, for example of a cylindrical shape, with a diameter of 2 to 5mm.

12. A grinder according to any one of the preceding claims wherein the displacing arm has a planar surface, particularly a planar lower surface, and, preferably, a thickness (normal to the plane) of 2 to 5 mm.

13. A grinder according to any one of the preceding claims wherein the displacing arm extends from the spindle (at the centre of the container) to within 10mm, preferably within 5mm, of the edge of the container.

14. A method for grinding fish bait, said method comprising grinding the fish bait in a grinder according to any one of claims 1 to 13.

15. A method according to claim 14 wherein the fish bait is boilies
